(19) Europäisches Patentamt
European Patent Office
Office européen des brevets

(11) Veröffentlichungsnummer : **0 507 132 B1**

(12) # EUROPÄISCHE PATENTSCHRIFT

(45) Veröffentlichungstag der Patentschrift :
**27.07.94 Patentblatt 94/30**

(51) Int. Cl.$^5$ : **C08G 77/398**

(21) Anmeldenummer : **92104379.0**

(22) Anmeldetag : **13.03.92**

(54) **Metallhaltige geformte Organosiloxanamin-Copolykondensate, Verfahren zu ihrer Herstellung und Verwendung.**

(30) Priorität : **03.04.91 DE 4110705**

(43) Veröffentlichungstag der Anmeldung :
**07.10.92 Patentblatt 92/41**

(45) Bekanntmachung des Hinweises auf die Patenterteilung :
**27.07.94 Patentblatt 94/30**

(84) Benannte Vertragsstaaten :
**AT BE CH DE DK ES FR GB IT LI LU NL PT**

(56) Entgegenhaltungen :
**EP-A- 0 151 991**
**EP-A- 0 275 399**

(56) Entgegenhaltungen :
**EP-A- 0 367 105**
**EP-A- 0 367 106**
**EP-A- 0 415 079**
**EP-A- 0 416 272**
**EP-B- 0 072 435**

(73) Patentinhaber : **Degussa Aktiengesellschaft**
**Weissfrauenstrasse 9**
**D-60311 Frankfurt (DE)**

(72) Erfinder : **Panster, Peter, Dr.**
**Im Lochseif 8**
**W-6458 Rodenbach (DE)**
Erfinder : **Wieland, Stefan, Dr.**
**Starkenburgring 27**
**W-6050 Offenbach/Main (DE)**

EP 0 507 132 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind metallhaltige Organosiloxanamin-Copolykondensate, die eine statistische, blockförmige oder gemischte Verteilung der Komponenten in der Polymermatrix aufweisen. Die geformten Pd, Pt, Ru und/oder Rh in überwiesend elementarer Form enthaltenden Polysiloxane besitzen die verfahrens- und anwendungstechnischen Vorteile einer makroskopischen Kugelform und stellen wertvolle Katalysatoren, insbesondere für Hydrierungen und Oxidationen dar. Besonders positive Eigenschaften dieser neuen heterogenen Katalysatoren sind die sehr guten physikalischen Eigenschaften sowie die hohe Reproduzierbarkeit des Organopolysiloxanträgers. Gleichzeitig werden Verfahren beschrieben, nach denen diese neuen Produkte hergestellt und eingesetzt werden.

Heterogen eingesetzte Edelmetall-Trägerkatalysatoren für die Verwendung auf dem Hydrier- und Oxidationsgebiet werden nach dem Stand der Technik präpariert, indem ein Edelmetall teilweise in elementarer Form, überwiegend aber jedoch in Form einer Verbindung auf einen geeigneten Träger aufgebracht wird. Liegt das Metall in Form einer Verbindung vor, muß der metallbeladene Träger anschließend noch einer reduktiven Behandlung unterzogen werden.

Diese geschieht entweder in Verbindung mit der Metallaufbringung in der Flüssigphase durch eine Behandlung mit einem Reduktionsmittel, z. B. mit Hydrazin, oder nach der Trocknung durch Behandlung mit Wasserstoff bei höherer Temperatur in der Gasphase oder auch erst unmittelbar vor oder bei dem katalytischen Einsatz im Reaktionsmedium. Gängige Träger, die hierbei Verwendung finden, sind insbesondere Aktivkohle und anorganische Materialien wie Aluminiumoxid, Kieselgel oder Zeolithe (s. K.-H. Schmidt, Chemische Industrie (1984) 380/388, 572/576, 716/718).

Nachteile dieser Trägermaterialien sind u. a. die mangelnde Reproduzierbarkeit der physikalischen und chemischen Eigenschaften (z. B. im Fall von Aktivkohle), die teilweise unbefriedigenden physikalischen sowie mechanischen Eigenschaften, die Tatsache, daß sie in der Regel ungeformt sind und erst nachträglich verformt werden müssen, sowie vor allem auch die mangelhafte Funktionalität, über die keine Steuerung der Metalldispersität und der Katalysatoreigenschaften möglich ist. Der letztgenannte Aspekt äußert sich oft in der Weise, daß zur Einstellung bestimmter katalytischer Eigenschaften eine chemische Nachbehandlung (z. B. Vergiftung mit Schwefel) notwendig ist.

Diese Nachteile lassen sich weitgehend vermeiden, wenn erfindungsgemäß neue geformte Organosiloxanamin-Copolykondensate des stofflich und herstellungsmäßig analog den deutschen Patentschriften 39 25 359 und 39 25 360 zugänglichen Typs als Träger für heterogene Pd-. Pt-, Ru-und/oder Rh-haltige Katalysatoren gemäß Anspruch 1 verwendet werden. Diese Träger können direkt in Form von Kugeln mit den für den Einsatz in Suspensionen oder im Festbett erforderlichen Durchmessern erhalten werden und lassen sich in den physikalischen und chemischen Eigenschaften in idealer Weise den Erfordernissen dieses Einsatzes anpassen. So lassen sich z. B. Teilchengrößen von 0,01 bis 3,0 mm, eine spezifische Oberfläche von 0,01 bis 1000 $m^2/g$ oder ein Porenvolumen von 0,01 bis 6,5 ml/g einstellen. Gleichzeitig können über die funktionellen Gruppen der Einheiten nach Formel (I) sowie (II) und/oder (III) die Metalldispersität sowie Metallverteilung gezielt eingestellt werden. Über die funktionellen Gruppen der Einheiten nach Formel (II) und/oder (III) kann darüber hinaus auch Einfluß auf die katalytischen Eigenschaften, z. B. durch einen vergiftenden Effekt, genommen werden. Entsprechendes gilt auch für die vernetzenden Brückenglieder nach Formel (V). Von Vorteil ist weiterhin die Tatsache, daß die Metallhaftung einerseits durch die Kugelform des Trägers und dem damit verbundenen verringerten Abrieb sowie andererseits auch durch die funktionellen Gruppen der Einheiten (II) und/oder (III) deutlich verbessert werden kann, was insbesondere beim Einsatz in komplexierenden sowie aggressiven Medien wichtig ist.

Die als Träger verwendeten Organosiloxanamin-Copolykondensate besitzen praktisch die vorteilhaften Eigenschaften anorganischer Polymersysteme, die sich darüber hinaus sehr stark modifizieren und den katalytischen Anforderungen anpassen lassen. Dies geschieht unter anderem über die Dichte der funktionellen Gruppen der Einheiten nach Formel (I) sowie (II) und/oder (III), welche wiederum über die Art und den Anteil der vernetzenden Brückenglieder nach Formel (V) im polymeren Träger gesteuert werden.

Eine häufig verwendete vernetzende Einheit ist die $SiO_{4/2}$-Einheit, die häufig auch gleichzeitig mit einer Stabilitätserhöhung verbunden ist. Organische Gruppen enthaltende Vernetzergruppen der Formel (V) können auch zur Steuerung der Oberflächeneigenschaften des Katalysatorsystems, insbesondere im Hinblick auf hydrophobe Eigenschaften, verwendet werden. Schließlich kann die Vernetzergruppierung auch einen cokatalytischen Einfluß haben.

Das Verhältnis der Summe von Einheiten der Formel (I) sowie (II) und/oder (III) zu den vernetzenden Brückengliedern (V) ist stark variierbar und kann innerhalb der Grenzen 1 : 0 bis 1 : 30 liegen. Probleme mit den morphologischen, physikalischen und chemischen Eigenschaften treten dabei nicht auf.

Entsprechendes gilt auch für das Verhältnis von Einheiten der Formel (I) zu Einheiten der Formel (II) und/oder (III), das innerhalb der Grenzen 10 : 90 bis 95 : 5 liegen kann (Anspruch 2).

Die in der Praxis zu wählenden Verhältnisse hängen primär von der Art des herzustellenden Katalysators und dem entsprechenden Einsatzgebiet und den hierfür optimalen chemischen und physikalischen Eigenschaften ab. z. B. davon, ob eine hohe Metallkonzentration oder eine hohe Dichte an Gruppen nach Formel (I) sowie (II) und/oder (III) zur Einstellung der Metalldispersität oder zur Beeinflussung der katalytischen Eigenschaften erforderlich ist.

Die Bausteine (I), (II), (III) und (V) der als Träger verwendeten Organosiloxanamin-Copolykondensate lassen sich beispielsweise durch Formeln wie $N[(CH_2)_3SiO_{3/2}]_3$, $N[(CH_2)_{10}SiO_{3/2}]_3$, $HN[(CH_2)_3SiO_{3/2}]_2$ $S[(CH_2)_3SiO_{3/2}]_2$, $S{=}C[NH\text{-}(CH_2)_5SiO_{3/2}]_2$ $NC\text{-}(CH_2)_3\text{-}SiO_{3/2}$, $H_2N\text{-}(CH_2)_2\text{-}NH\text{-}(CH_2)_3SiO_{3/2}$ $SiO_{4/2}$, $(CH_3)_2SiO_{2/2}$, $AlO_{3/2}$, $TiO_{4/2}$, $C_6H_5SiO_{3/2}$
beschreiben.

Die Kombination zweier oder mehrerer der Metalle miteinander, wie auch mit weiteren Übergangsmetallen, Alkali- und/oder Erdalkalimetallen sowie mit den Metallen der III., IV. und V. Hauptgruppe, wobei insbesondere Li, Na, K, Mg, Ca, Fe, Cu, Ag, Au, Zn, Cd, Sn, Pb, Sb und Bi bevorzugt sind, bietet zusätzliche Möglichkeiten im Hinblick auf Reaktivität und Selektivität der Katalysatoren neben der Steuerung dieser Eigenschaften über die Gruppen (I), (II) und/oder (III). Die Verwendung von Multimetallkatalysatoren ist in der Technik gängige Praxis. Die neben den in Anspruch 1 genannten Metallen zugesetzten Metallkomponenten wirken hierbei als Promotoren oder Moderatoren. Die Kombination mehrerer Metalle hat sich z. B. bei der Synthese von Vinylacetat als sinnvoll erwiesen. Auf diesem Gebiet werden u. a. Kombinationen wie Pd/Au, Pd/Cd oder Pd/Au/Bi/K beschrieben.

Für Oxidationsreaktionen werden häufig Pd/Pt/Bi-Katalysatoren und für die selektive Hydrierung von C-C-Dreifachbindungen zu Alkenen werden Pd/Pb-Systeme eingesetzt.

Bei den erfindungsgemäßen metallhaltigen geformten Copolykondensaten ergeben sich aus der Kombination verschiedener Metalle prinzipiell analoge synergistische Effekte wie sie für die oben genannten Kombinationen gelten.

Gemäß Anspruch 3 kommt, aufgrund der besonderen stofflichen Eigenschaften und der Verfügbarkeit der Ausgangsmaterialien, Organosiloxanamin-Copolykondensaten, bei denen $R^1$ bis $R^6$ eine Gruppe der allgemeinen Formel (IV) sind, welche gleich oder verschieden sind, eine besondere Bedeutung zu. Entsprechendes gilt auch für die gemäß Anspruch 5 beanspruchten Verbindungen, bei denen $R^1$ bis $R^6$ für eine Gruppe der allgemeinen Formel (VI) stehen.

Im Hinblick auf eine unterschiedliche Form der Metallaufbringung kann es, auch in Abhängigkeit von der Metallkonzentration, wichtig sein, wenn die Organosiloxan-Copolykondensate gemäß Anspruch 4 in Form von statistischen, Block- oder gemischten Verbindungen vorliegen. Im einzelnen kann es z. B. von Vorteil sein, wenn alle Einheiten nach Formel (I) oder (II) und/oder (III) in den Randzonen der Partikel vorliegen. Dies kann z. B. der Fall sein, wenn es darum geht, das aufgebrachte Metall, evtl. bei einer niedrigen Gesamtkonzentration, in den Randzonen der kugelförmigen Teilchen zu konzentrieren. Andererseits kann es, bei einer sehr hohen Metallkonzentration, günstig sein, die Einheiten nach Formel (I) oder (II) und/oder (III) gleichmäßig über das gesamte Polymerpartikel zu verteilen und gegebenenfalls dabei in Form von Blöcken anzuordnen.

Ebenso kann im Hinblick auf die Einstellung bestimmter Oberflächeneigenschaften eine Komponente des Copolykondensates bevorzugt in die Randzonen der Polymerpartikel gebracht werden.

In der Regel ist die höchste Aktivität der metallhaltigen Copolykondensate beim Einsatz als Katalysator dann gegeben, wenn das aufgebrachte Metall weitgehend in nullwertiger, d. h. elementarer Form vorliegt. Dies geschieht mit Hilfe der in Anspruch 10 bis 13 genannten Verfahrensmaßnahmen. Natürlich kann die Umwandlung der aufgebrachten Metallverbindung in die nullwertige Form auch, wie in Anspruch 13 beschrieben, unmittelbar vor dem katalytischen Einsatz erfolgen.

In Abhängigkeit von der jeweiligen Anwendung für die erfindungsgemäßen Katalysatoren kann es sinnvoll sein, die Edelmetallgehalte innerhalb des in Anspruch 7 genannten Bereichs zu variieren. In der Regel ist dabei eine Zunahme des Gehaltes an einem des in Anspruch 1 genannten Metalls mit einer Erhöhung der katalytischen Aktivität verbunden. Im Einzelfall, z. B. wenn kurze Verweilzeiten gefordert sind, kann dies sehr erwünscht sein. Häufig ist jedoch mit der Anhebung der Metallkonzentration auch ein Verlust an Selektivität zu beobachten. Interessant sind deshalb in verschiedenen Fällen Katalysatoren mit relativ niedrigen Metallgehalten, die hochselektiv sind, bei denen das Edelmetall jedoch in Form einer dünnen, nur wenige μm starken Schicht auf den Träger aus geformtem Organosiloxanamin-Copolykondensat aufgebracht ist (Schalenkatalysator).

Gegenstand der Erfindung sind auch Verfahren zur Herstellung der neuen Katalysatoren. Das in Anspruch 8 beschriebene Verfahren beinhaltet im wesentlichen das Aufbringen einer Metallverbindung des Pd, Pt, Ru und/oder Rh auf ein stofflich und herstellungsmäßig im wesentlichen in den beiden deutschen Patentschriften 39 25 359 und 39 25 360 beschriebenes geformtes Organosiloxanamin-Copolykondensat und die anschließende reduktive Nachbehandlung des metallhaltigen Trägers. Im Prinzip können dabei als Ausgangsmaterialien, neben den genannten Salzen, alle möglichen Metallverbindungen eingesetzt werden, denn diese müssen lediglich ein Mindestmaß an Löslichkeit und die Bereitschaft zur leichten reduktiven Zersetzung zeigen. Besonders wichtige Metallverbindungen, weil sie überwiegend kommerziell erhältlich oder leicht präparativ zugänglich sind, sind die wasserhaltigen oder wasserfreien Metallverbindungen nach Formel (VII).

Geeignete Lösungsmittel für diesen Einsatz müssen in der Lage sein, diese Metallverbindung wenigstens teilweise zu lösen, was einen durchweg polaren Charakter erfordert. Dieser ist z. B. im Fall von Aceton, Nitromethan, Ethylenglycol, Diethylenglycol, Triethylenglycol und entsprechenden Ethern, Dimethylformamid, Dimethylsulfoxid, Tetrahydrofuran, Dioxan, Acetonitril gegeben. Vor allem unter verfahrenstechnischen, toxikologischen und ökonomischen Gesichtspunkten besonders bevorzugt sind dabei aber gemäß Anspruch 10 Wasser und niedere, lineare oder verzweigte Alkohole mit 1 bis 5 C-Atomen oder entsprechende Wasser/Alkohol-Gemische.

Die bei der Umsetzung der Metallverbindung (VII) mit dem Organopolysiloxan-Copolykondensat gemäß Anspruch 8 gewählte Reaktionstemperatur liegt unterhalb, bei oder oberhalb Raumtemperatur bei Reaktionszeiten von 1 Min. bis zu 48 Stunden. Sie hängt insbesondere von der Löslichkeit und Stabilität der Metallverbindung (VII) sowie von der Art des Organopolysiloxans ab, z. B. in Abhängigkeit vom Gehalt an Gruppen nach Formel (II) und/oder (III). Generell ist es vorteilhaft, diese Umsetzung bei möglichst niedriger Temperatur, insbesondere Raumtemperatur durchzuführen.

Höhere Temperatur wird dann z. B. angewandt, wenn die Löslichkeit der Metallkomponente bei Raumtemperatur unbefriedigend ist, oder ihre Absorption am Träger nur sehr langsam verläuft. Analoges gilt auch für die Reaktionsdauer, die insbesondere den letztgenannten Aspekten Rechnung tragen muß, in der Regel aber nicht wesentlich über den Zeitbedarf einer vollständigen Metallabsorption hinaus ausgedehnt wird.

Beim Arbeiten in wäßrigem oder alkoholischem Medium kann es hinsichtlich der Erzielung einer hohen Metalldispersitüt und z. B. zur Vermeidung der Bildung von schlecht komplexierenden Metalloxiden oder -hydroxiden von Vorteil sein, wenn der pH-Wert der Reaktionslösung mit Hilfe einer anorganischen oder organischen Säure bzw. Base auf eine definierte Zahl im Bereich von 4 - 10 eingestellt wird.

Bei der Herstellung von Copolykondensaten, die mehrere Metalle enthalten, kann deren Aufbringung entweder durch gleichzeitige Reaktion des Copolykondensates mit Metallverbindungen der Formel (VII) unter den genannten Bedingungen erfolgen oder man arbeitet in mehreren hintereinander geschalteten Reaktionsschritten, wobei der metallhaltige Feststoff jeweils allen genannten, sich diesem Schritt anschließenden Maßnahmen teilweise oder vollständig unterworfen werden kann.

Die vorzugsweise angewandte reduktive Behandlung des ein oder mehrere Metalle enthaltenden Feststoffs, bei dem das Metall noch in Form einer Metallkomplex-Verbindung vorliegt, erfolgt bevorzugt in wäßrigem Medium, vor allem auch deshalb, weil sich darin bei der Reduktionsbehandlung gebildete Nebenprodukte, z. B. anorganische Salze, gut lösen und somit leicht von dem metallhaltigen Endprodukt abgetrennt werden können. Die Dauer dieser Behandlung und die Temperatur, bei der sie durchgeführt wird, hängen insbesondere von der Art und Menge des gewählten Reduktionsmittels und von der Stabilität des aus der Umsetzung der Metallkomponente (VII) mit dem Copolykondensat resultierenden polymeren Metallkomplexes ab. Verständlicherweise werden umso höhere Temperaturen und umso längere Behandlungszeiten gewählt werden, je stabiler dieser Metallkomplex ist. In der Regel ist dieser Schritt jedoch innerhalb von längstens einigen Minuten bis einigen Stunden quantitativ abgeschlossen. Anschließend wird der metallhaltige kugelförmige Feststoff durch Dekantieren oder Filtrieren von der flüssigen Phase abgetrennt, bevorzugt mit dem gleichen Lösungsmittel gewaschen und dann direkt der Verwendung zugeführt oder unter den angegebenen Bedingungen getrocknet und gegebenenfalls getempert sowie klassiert.

Eine Ausführungsform der erfindungsgemäßen Verfahrensweise sieht gemäß Anspruch 10 vor, unabhängig von dem beim Aufbringen der Metallkomponente auf den Träger verwendeten Lösungsmittel, den nach dem Abtrennen der flüssigen Phase verbleibenden metallhaltigen Feststoff mit einem niederen, linearen oder verzweigten Alkohol mit 1 bis 5 C-Atomen zu waschen und so intensiv mit einem der genannten Alkohole zu benetzen. Diese Maßnahme kann einerseits einer leichteren Trocknung des metallhaltigen Feststoffs dienen, z. B. wenn bei der reduktiven Behandlung Wasser als Lösungsmittel verwendet wird, und kann andererseits auch praktiziert werden, um die Reduktion der Metallkomponente während des Trocknungs- und gegebenenfalls Temperungsschrittes zu vervollständigen.

Bevorzugt verwendete Reduktionsmittel sind generell die in Anspruch 11 genannten Verbindungen.

Eine Variante des Verfahrensschrittes der reduktiven Behandlung sieht gemäß Anspruch 12 vor, daß man nach zunächst analoger Verfahrensweise wie in Anspruch 8 das Metall-beladene geformte Organosiloxanamin-Copolykondensat nach gängigen Techniken von der flüssigen Phase abtrennt und dann zunächst trocknet sowie tempert und die reduktive Behandlung entweder während der Trocknung und Temperung, z. B. durch Reaktion mit Wasserstoff, Kohlenmonoxid, Mischungen daraus, flüchtigen Alkoholen oder Aldehyden, oder diese erst zu einem späteren Zeitpunkt durchführt. Durch diese besondere Form der Reduktion können die Eigenschaften des erhaltenen Katalysatorsystems stark beeinflußt werden.

Daneben lassen sich dabei auch sehr stabile Metallkomplexe zerstören und elementares Metall daraus

abscheiden. Alternativ kann die Reduktion zunächst zurückgestellt und erst zu einem späteren Zeitpunkt, vorteilhafterweise in Verbindung mit dem katalytischen Einsatz, durchgeführt werden. Dies geschieht gemäß Anspruch 13 am besten durch eine reduktive Behandlung mit Wasserstoff vor oder während einer Hydrierungsreaktion.

Diese Variante der Reduktion bietet z. B. Vorteile. wenn der reduktiv behandelte metallhaltige Feststoff schwierig zu handhaben ist, weil er bei Kontakt mit Luft desaktiviert wird oder sich entzündet.

Natürlich gilt auch bei der Verfahrensvariante nach Anspruch 12, daß die Metallaufbringung auf das geformte Organosiloxanamin-Copolykondensat bevorzugt in Wasser oder einem niederen Alkohol mit 1 bis S C-Atomen erfolgt und die reduktive Behandlung unter Verwendung des nach dem Waschen oder Extrahieren am metallhaltigen Feststoff verbliebenen Alkohols als Reduktionsmittel während der Trocknung und/oder Temperung durchgeführt wird.

Die erfindungsgemäßen metallhaltigen geformten Organosiloxan-Copolykondensate besitzen sehr gute Eigenschaften beim Einsatz als Katalysatoren für Übertragungen von Wasserstoff oder Sauerstoff, d. h. insbesondere zur Durchführung von Hydrier- und Oxidationsreaktionen. Hervorzuheben ist im Fall der Hydrierreaktionen insbesondere die hohe Selektivität, mit der z. B. Kohlenstoff-Kohlenstoff-Mehrfachbindungen selektiv neben anderen funktionellen Gruppen, wie z. B. Ketogruppen, hydriert werden können.

Prinzipiell sind metallspezifisch analoge katalytische Grundeigenschaften gegeben, wie im Falle anderer Edelmetallkatalysatoren auf Basis von Aktivkohle oder anorganischen bzw. organischen Trägersystemen, so daß z. B. mit den Platin-haltigen Vertretern gemäß Anspruch 1 prinzipiell natürlich auch Hydrosilylierungsreaktionen durchführbar sind.

Vor allem in Abhängigkeit von der eingestellten Korngröße werden diese neuen Katalysatoren entweder in Suspension oder im Festbett oder im Fließbett für Reaktionen in flüssiger oder gasförmiger Phase eingesetzt. Ein wichtiger Vorteil ist dabei die vorgegebene Kugelform des Polysiloxanträgers, welche sowohl bei kleinem wie auch größerem Teilchendurchmesser gegeben ist und mit einem geringeren Strömungswiderstand und vernachlässigbarem Abrieb verbunden ist.

Die Erfindung wird nachfolgend anhand von Ausführungsbeispielen weiter erläutert.

Beispiel 1

20 g eines Organopolysiloxan-Copolykondensates der Formel $S(CH_2\text{-}CH_2\text{-}CH_2\text{-}SiO_{3/2})_2 \cdot 0{,}2\ N(CH_2\text{-}CH_2\text{-}CH_2\text{-}SiO_{3/2})_3$ mit kugelförmigen Teilchen in einer Körnung von 95 % zwischen 0,2 und 0,8 mm wurden in 150 ml destilliertem Wasser suspendiert und mit einer Lösung von 2,25 g $K_2PtCl_4$, gelöst in 50 ml Wasser, versetzt. Zur Adsorption der Edelmetallverbindung wird 1 Stunde bei Raumtemperatur gerührt. Der Feststoff wird abfiltriert, die farblose Lösung verworfen und das gelbe Rohprodukt in 180 ml Wasser eingetragen und mit 2,69 g $NaBH_4$ (95 %ig) versetzt.

Der Ansatz wurde spontan reduzierte und die Temperatur stieg auf 60° C. Der Katalysator wurde abgesaugt, mit Wasser und anschließend mit Methanol gewaschen und unter $N_2$ bei 150° C getrocknet.

Beispiel 2

10 g eines Organopolysiloxan-Copolykondensates der Formel $HSCH_2\text{-}CH_2\text{-}CH_2\text{-}SiO_{3/2} \cdot N(CH_2\text{-}CH_2\text{-}CH_2\text{-}SiO_{3/2})_3$ mit kugelförmigen Teilchen in einer Körnung von 90 % zwischen 0,1 und 0,4 mm wurden in 150 ml destilliertem Wasser suspendiert und mit einer Lösung von 1,13 g $K_2PtCl_4$, gelöst in 50 ml Wasser, versetzt und gerührt. Nach 35 Minuten war die überstehende Lösung farblos und die Adsorption beendet. Der orangegelbe Feststoff wurde isoliert (Nutsche), in einen Rundkolben überführt, mit 100 ml Natriumformiatlösung (4,59 g Na-formiat) versetzt und der pH-Wert mit NaOH auf 8,7 eingestellt. Die Suspension wurde auf 60° C erhitzt und 1 Stunde bei dieser Temperatur gerührt. Der Katalysator wurde abgesaugt, mit Wasser und Ethanol gewaschen und bei 110° C 12 Stunden im Vakuum getrocknet. Der fertige Katalysator war olivgrün gefärbt.

Beispiel 3

10 g eines geformten Organopolysiloxan-Copolykondensates der Formel $H_2N\text{-}(CH_2)_2\text{-}NH\text{-}(CH_2)_2\text{-}NH\text{-}(CH_2)_3\text{-}SiO_{3/2} \cdot N(CH_2\text{-}CH_2\text{-}CH_2\text{-}SiO_{3/2})_3 \cdot SiO_2$ wurden in 80 ml Wasser suspendiert und 698 mg $RhCl_3 \cdot x\ H_2O$ (37,7 % Rh),gelöst in 20 ml Wasser, zugegeben. Zunächst wurde eine Stunde bei Raumtemperatur und dann 4 Stunden bei 55° C gerührt.

Die zunächst dunkelrote Lösung entfärbte sich und es wurde ein gelber Feststoff nach Filtration isoliert. Der Katalysator wurde mit Ethanol gewaschen, bei 90° C im Vakuum getrocknet und dann unmittelbar für Hydrierreaktionen eingesetzt.

Beispiel 4

Analog dem in DE-PS 39 25 359 und DE-PS 39 25 360 beschriebenen Verfahren wurden 272,77 g (0,433 Mol) $N[CH_2-CH_2-CH_2-Si(OC_2H_5)_3]_3$, 36,86 g (0,087 Mol) $HN[CH_2-CH_2-CH_2-Si(OC_2H_5)_3]_2$, 100,17 g (0,433 Mol) $NC-CH_2-CH_2-CH_2-Si(OC_2H_5)_3$ und 90,19 g (0,433 Mol) $Si(OC_2H_5)_4$ in 500 ml Ethanol vereinigt. Die Mischung wurde in einem 3 l-Reaktionsgefäß mit KPG-Rührer mit Halbmondrührblatt, Rückflußkühler und Innenthermometer auf 75° C aufgeheizt. Die klare Lösung wurde mit 150 ml 90° C heißem, entsalztem Wasser versetzt, dann 10 Minuten unter Rückfluß gerührt und dann auf 65° C abgekühlt. Unter langsamen Rühren wurde die klare viskose Lösung bei dieser Temperatur gehalten, bis die Gelierung einsetzte. 1 Minute nach dem Einsetzen der Gelierung wurden 500 ml 1-Octanol und nach vollzogener Homogenisierung 800 ml 50° C warmes Wasser zugesetzt. Es wurde anschließend 2 Stunden mit 700 U/min bei Rückflußtemperatur gerührt, dann abgekühlt und die gesamte Reaktionsmischung in einen Stahlautoklaven überführt und 24 Stunden bei 150° C Eigendruck langsam gerührt.

Anschließend wurde abgekühlt und der geformte Feststoff von der flüssigen Phase abgetrennt und zweimal mit je 500 ml Ethanol extrahiert. Nach 4-stündiger Trocknung bei 90° C und 12-stündiger Trocknung bei 135° C unter $N_2$-Atmosphäre wurde mit einer Ausbeute von 97,5 % der Theorie ein symmetrisches kugelförmiges Produkt, bestehend aus Polymereinheiten der Formel $N(CH_2-CH_2-CH_2-SiO_{3/2})_3 \cdot 0,2\ H-N(CH_2-CH_2-CH_2-SiO_{3/2})_2 \cdot NC-(CH_2)_3SiO_{3/2} \cdot SiO_2$ isoliert.

5 g dieses geformten Organopolysiloxan-Copolykondensates (Korngrößenverteilung 0,3 - 1,2 mm) wurden mit 50 ml Wasser, in dem 558 mg $RhCl_3 \cdot x\ H_2O$ (37,7 % Rh) gelöst waren, versetzt und bei Raumtemperatur, dann bei 70° C jeweils 1 Stunde gerührt. Der pH-Wert stieg dabei von 1,5 auf 3,8 an. Der hellgelbe Feststoff wurde abgesaugt und in 50 ml Wasser eingetragen. Es wurden 9,6 ml 37 Gew.-%ige Formalinlösung zugegeben, der pH-Wert alkalisch gestellt und 3 Stunden bei 60° C gerührt. Das nun grün gefärbte Polysiloxan wurde abgesaugt, mit Wasser und Ethanol mehrmals gewaschen und bei 150° C im $N_2$-Strom getrocknet, wobei sich der Katalysator schwarz färbte.

Beispiel 5

5 g eines geformten Organopolysiloxan-Copolykondensates der Formel $S=C[NH(CH_2)_3-SiO_{3/2}]_2 \cdot 0,5\ N(CH_2-CH_2-CH_2-SiO_{3/2})_3$ (Korngrößenverteilung 0,2 - 0,6 mm) wurden mit 50 ml Wasser, in dem 819,8 mg $Na_2PdCl_4$ gelöst waren, versetzt und bei Raumtemperatur, dann bei 70° C je 1 Stunde gerührt. Der pH-Wert wurde dabei mit $Na_2CO_3$ auf pH=8 gestellt.

Der Feststoff wurde durch Filtration isoliert, in 40 ml Wasser eingetragen, der pH auf 9,2 eingestellt, 9,3 ml 37 Gew.-%ige Formalinlösung zugesetzt und 1 Stunde am Rückfluß gekocht. Das metallhaltige Polysiloxan wurde abfiltriert und im Trockenschrank bei 135° C getrocknet.

Beispiel 6

5 g eines Organopolysiloxan-Copolykondensates der Formel $S_4(CH_2-CH_2-CH_2-SiO_{3/2})_2 \cdot N(CH_2-CH_2-CH_2-SiO_{3/2})_3 \cdot SiO_2$ mit kugelförmigen Teilchen der Korngröße 0,2 - 0,8 mm wurden mit 50 ml einer Lösung von 736.1 mg $RuCl_3 \cdot H_2O$ (35,75 % Ru) in Wasser versetzt, der pH-Wert mit $K_2CO_3$ auf 6,0 eingestellt und 45 Minuten bei 60° C gerührt. Nach dem Abkühlen der Lösung wurde der pH auf 9,0 gestellt und 5,1 ml 37 Gew.-%ige Formalinlösung zugegeben, erneut auf 60° C hochgeheizt und 1 Stunde bei dieser Temperatur gerührt. Isolation des Katalysators erfolgte wie in Beispiel 1.

Beispiel 7

10 g eines gemäß Beispiel 7 der DE-PS 39 25 359 hergestellten Polysiloxans wurden gemäß Beispiel 5 mit 819,8 mg $Na_2PdCl_4$ umgesetzt und ein Feststoff der Zusammensetzung $2\ C_5H_4(CH_2-CH_2-CH_2-SiO_{3/2})_2 \cdot N(CH_2-CH_2-CH_2-SiO_{3/2})_3$ / 2,8 % Pd erhalten.

Beispiel 8

5 g eines gemäß Beispiel 14 der DE-PS 39 25 359 erhaltenen Polysiloxans wurde gemäß Beispiel 1 umgesetzt und ein Feststoff der Zusammensetzung $0,1\ S(CH_2-CH_2-CH_2-SiO_{3/2})_2 \cdot N(CH_2-CH_2-CH_2-SiO_{3/2})_3 \cdot 0,05\ ZrO_{4/2}$ / 5 % Pt erhalten.

Beispiel 9

5 g eines gemäß Beispiel 7 der DE-PS 39 25 360 erhaltenen Polysiloxans wurde gemäß Beispiel 5 umgesetzt und ein Feststoff der Zusammensetzung $(C_2H_5)_2N\text{-}CS\text{-}NH\text{-}(CH_2)_3\text{-}SiO_{3/2} \cdot N[(CH_2)_8SiO_{3/2}]_3 \cdot SiO_2$ / 5 % Pd erhalten.

Beispiel 10

10 g eines Polysiloxans der Zusammensetzung $N[(CH_2)_3SiO_{3/2})_3 \cdot 5\,SiO_2 \cdot H_3C\text{-}(CH_2)_7SiO_{3/2}$ wurden gemäß Beispiel 6 mit $RuCl_3 \cdot x\,H_2O$ umgesetzt und 10,1 g eines 1 %igen Ru enthaltenden Feststoffes isoliert.

Beispiel 11

10 g eines Polysiloxans der Zusammensetzung $N[(CH_2)_3SiO_{3/2}]_3 \cdot 2\,AlO_{3/2} \cdot (H_3C)_3SiO_{1/2}$ wurden gemäß Beispiel 6 mit $Na_2PdCl_4$ umgesetzt und 10,01 g eines 0,1 %igen Pd enthaltenden Feststoffes isoliert.

Beispiel 12

400 mg des in Beispiel 5 hergestellten Pd-Katalysators wurden mit 10 g Zimtsäure in 100 ml Ethanol in einer Niederdruckhydrierapparatur aus Glas mit Begasungsrührer vorgelegt. Bei einer Temperatur von 25° C und einem $H_2$-Überdruck von 10 mbar wurde Zimtsäure zu Phenylpropansäure hydriert, die katalytische Aktivität betrug 12 ml $H_2$/min/g Katalysator.

Beispiel 13

1 g des in Beispiel 4 hergestellten Rh-Katalysators wurden mit 10 ml Chinolin in 100 ml Ethanol in einer Niederdruckhydrierapparatur aus Glas mit Begasungsrührer vorgelegt. Bei einer Temperatur von 40° C und einem $H_2$-Überdruck von 10 mbar wurde Chinolin hydriert, die katalytische Aktivität betrug 16 ml $H_2$/min/g Katalysator.

**Patentansprüche**

1. Palladium, Platin, Ruthenium und/oder Rhodium in überwiegend elementarer Form sowie gegebenenfalls Promotoren und/oder Moderatoren enthaltende geformte Organosiloxanamin-Copolykondensate **dadurch gekennzeichnet,**
daß das geformte Organosiloxanamin-Copolykondensat aus Einheiten der Formel

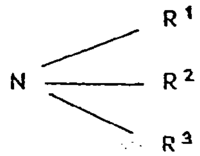

(I)

sowie aus Einheiten der Formel

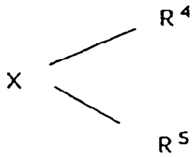

(II)

und/oder aus Einheiten der Formel (III) oder

$$Y - R^6 \qquad (III)$$

besteht, wobei $R^2$ bis $R^6$ gleich oder verschieden sind, und eine Gruppe der allgemeinen Formel

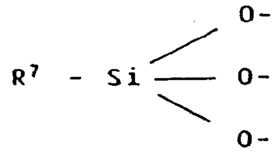 (IV)

bedeuten, wobei $R^7$ direkt an das Stickstoffatom bzw. die Gruppe X bzw. die Gruppe Y gebunden ist und eine lineare oder verzweigte Alkylengruppe mit 1 bis 10 C-Atomen, eine Cycloalkylengruppe mit 5 bis 8 C-Atomen oder eine Einheit der allgemeinen Formel

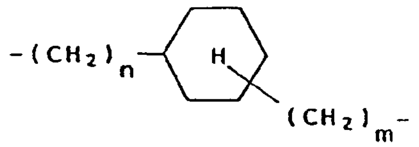 oder 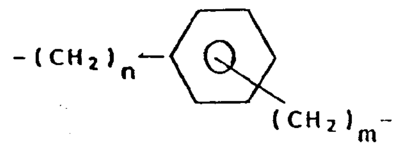

darstellt, in der n bzw. m eine Zahl von 0 bis 6 ist und die Zahl N-, X-, Y-ständiger und m die Zahl Si- ständiger Methylengruppen angibt,
$R^1$ ebenfalls eine Gruppe der Formel (IV) ist oder für
H, $CH_3$, $C_2H_5$, $C_3H_7$ steht,
X für -S-, $-S_2-$, $-S_3-$, $-S_4-$

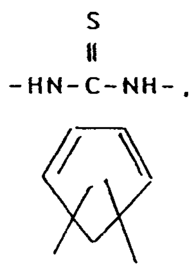 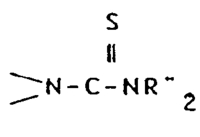 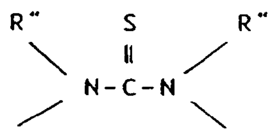,

und
Y für -CN, -SCN, -SH, $-S-CH_3$, $-S-C_2H_5$, $-S-C_3H_7$ $-NH_2$, $-NH-(CH_2)_2-NH_2$, $-NH-(CH_2)_2-NH-(CH_2)_2-NH_2$ $-N(CH_3)_2$, $-N(C_2H_5)_2$, $-N(C_3H_7)_2$,

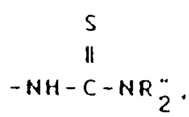, 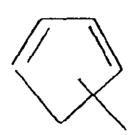,

steht. wobei R″ gleich H oder eine lineare oder verzweigte Alkylgruppe mit 1 bis 5 C-Atomen oder eine Gruppe $-(CH_2)_n-NR'''_2$ ist, wobei n eine Zahl von 1 bis 6 bedeutet und R‴ dieselbe Bedeutung wie R″ hat, und die freien Valenzen der an das Si-Atom gebundenen Sauerstoffatome wie bei Kieselsäuregerüsten durch Siliciumatome weiterer Gruppen der Formel (IV) und/oder über die Metallatome in einem oder mehreren vernetzenden Brückengliedern

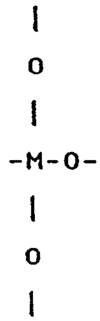 oder 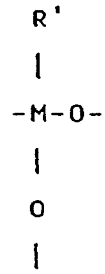 oder 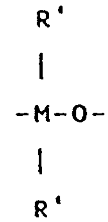

bzw. (V)

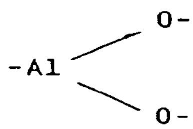 oder 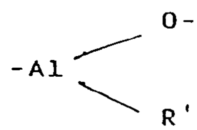

abgesättigt sind. M ein Si-, Ti- oder Zr-Atom und R′ eine lineare oder verzweigte Alkylgruppe mit 1 bis 5 C-Atomen oder eine Phenylgruppe ist, das Verhältnis der Siliciumatome aus den Gruppen der allgemeinen Formel (IV) zu den Atomen M und Al in den vernetzenden Brückengliedern (V) 1 : 0 bis 1 : 30 beträgt und die metallhaltigen polymeren Organosiloxanamin-Copolykondensate makroskopisch als kugelförmige Teilchen mit einem Durchmesser von 0,01 bis 3,0 mm, einer spezifischen Oberfläche von 0,01 bis 1000 $m^2/g$, einem spezifischen Porenvolumen von 0,01 bis 6,5 ml/g, sowie einer Schüttdichte von 50 bis 1000 g/l, vorliegen.

2. Metallhaltige geformte Organosiloxanamin-Copolykondensate nach Anspruch 1,
**dadurch gekennzeichnet,**
daß das Verhältnis von Einheiten der Formel (I) zu Einheiten der Formel (II) und/oder (III) 10 : 90 bis 95 : 5 Mol% beträgt.

3. Metallhaltige geformte Organosiloxanamin-Copolykondensate nach Ansprüchen 1 oder 2,
**dadurch gekennzeichnet,**
daß $R^1$ bis $R^6$ eine Gruppe der allgemeinen Formel (IV) sind und gleich oder verschieden sind.

4. Metallhaltige geformte Organosiloxanamin-Copolykondensate nach Ansprüchen 1 bis 3,
**dadurch gekennzeichnet,**
daß sie als statistische Copolykondensate, Block-Copolykondensate oder auch als gemischte Copolykondensate, mit gemischter Verteilung der Komponenten in der Polymermatrix, vorliegen.

5. Metallhaltige geformte Organosiloxanamin-Copolykondensate gemäß den Ansprüchen 1 bis 4,
**dadurch gekennzeichnet,**
daß $R^1$ bis $R^6$ für eine Gruppe der allgemeinen Formel

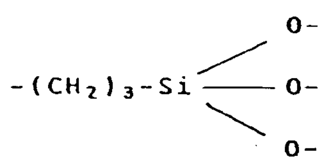 (VI)

stehen.

6. Metallhaltige geformte Organosiloxanamin- Copolykondensate gemäß den Ansprüchen 1 bis 5,
**dadurch gekennzeichnet,**

daß die Metalle Palladium, Platin, Ruthenium und Rhodium jeweils allein oder in Kombination auf dem geformten Organosiloxanamin-Copolykondensat vorliegen.

**7.** Metallhaltige geformte Organosiloxanamin-Copolykondensate, gemäß den Ansprüchen 1 bis 6, **dadurch gekennzeichnet**, daß der Gehalt an Pd, Pt, Ru und/oder Rh des Copolykondensats 0,001 Gew.% bis 20,0 Gew.%, beträgt.

**8.** Verfahren zur Herstellung der metallhaltigen geformten Organosiloxanamin-Copolykondensate nach den Ansprüchen 1 bis 7,
**dadurch gekennzeichnet,**
daß man eine oder mehrere wasserhaltige oder wasserfreie Metallverbindungen (VII) von
$M'_2PdX'_6$, $M'_2PdX'_4$, $PdX'_2$, $PdL_2X'_2$, $PdL_4X'_2$
$M'_2PtX'_6$, $M'_2PtX'_4$, $PtX'_2$, $PtL_2X'_2$, $PtL_4X'_2$
$M'_4RuX'_6$, $M'_4[Ru_2OX'_{10}]$, $RuX'_3$, $Ru(NO)X'_3$, $RuX'_3L_3$
$RuX'_2L_4$, $RuX'_2L_6$, $RuX'_3L_6$
$M'_2RhX_5L$, $M'_3RhX_6$, $RhX'_3$, $RhL_5\,X'_3$, $RhL_6X'_3$,
$RhL_6X'_3$, $RhL_4X'_3$
$M'RhX'_4,L_2$
wobei

X' für Cl, Br, J, CN, $NO_2$, $NO_3$, $\frac{1}{2}SO_4$, Acetat,

Acetylacetonat, OH,
L für $NH_3$, primäres, sekundäres oder tertiäres Amin oder Diamin, CO oder $H_2O$ und

M' für H, Na, K, $NH_4$, $\frac{1}{2}Ca$, $\frac{1}{2}Ba$ steht,

in einem, die Metallverbindung (VII) wenigstens teilweise lösenden Lösungsmittel oder Lösungsmittelgemisch mit einem kugelig geformten, in Form eines statistischen, Block- oder gemischten Copolykondensates vorliegenden Organosiloxanamin-Ausgangsmaterial, bestehend aus Einheiten der Formel (I) sowie aus Einheiten der Formel(n) (II) und/oder (III), wobei X, Y und $R^1$ bis $R^6$ dieselbe Bedeutung wie in Anspruch 1 haben und die freien Valenzen der an das Siliciumatom gebundenen Sauerstoffatome wie bei Kieselsäuregerüsten durch Siliciumatome weiterer Gruppen der Formel (IV) und/oder über die Metallatome in einem oder mehreren vernetzenden Brückengliedern (V) abgesättigt sind und M und R' dieselbe Bedeutung wie in Anspruch 1 haben, und das Verhältnis der Siliciumatome aus den Gruppen der allgemeinen Formel (IV) zu den Atomen M und Al in den vernetzenden Brückengliedern (V) 1 : 0 bis 1 : 30 beträgt, und die kugelförmigen Teilchen einen Durchmesser von 0,01 bis 3,0 mm, eine spezifische Oberfläche von 0,01 bis 1000 $m^2/g$, ein spezifisches Porenvolumen von 0,01 bis 6,5 ml/g, sowie eine Schüttdichte von 50 bis 1000 g/l haben, in einem der gewünschten Metallkonzentration entsprechenden stöchiometrischen Verhältnis umsetzt, den so erhaltenen Feststoff anschließend, gegebenenfalls nach einem Wechsel des Lösungsmittels, Abtrennen von der flüssigen Phase, Waschen mit demselben oder einem anderen Lösungsmittel oder Extrahieren, Trocknen bei Raumtemperatur bis 250° C an Luft, unter Schutzgas oder im Vakuum, Tempern an der Luft oder unter Schutzgas bei 150 bis 300° C und Klassieren, mit einer stöchiometrischen oder unterschüssigen oder überschüssigen Menge eines Reduktionsmittels 1 Min. bis 48 Stunden bei Raumtemperatur bis 200° C und gegebenenfalls einem der Summe der Partialdrucke der Komponenten der Reaktionsmischung bei der jeweiligen Temperatur entsprechenden Überdruck behandelt.

**9.** Verfahren gemäß Anspruch 8,
**dadurch gekennzeichnet,**
daß man die Umsetzung der Metallkomponente mit dem geformten polymeren Organosiloxanamin-Copolykondensat und die anschließende reduktive Behandlung des Metallverbindungen (VII) enthaltenden Feststoffs in Wasser und/oder einem linearen oder verzweigten Alkohol mit 1 bis 5 C-Atomen oder einer Mischung von beiden durchführt.

**10.** Verfahren gemäß Anspruch 8 oder 9,
**dadurch gekennzeichnet,**
daß man das mit Metallverbindungen (VII) versetzte, gegebenenfalls mit einem Reduktionsmittel behandelte, geformte Organosiloxanamin-Copolykondensat nach dem Abtrennen der flüssigen Phase mit einem niederen, linearen oder verzweigten Alkohol mit 1 bis 5 C-Atomen wäscht.

**11.** Verfahren gemäß Anspruch 8 bis 10,
**dadurch gekennzeichnet,**
daß man die reduktive Behandlung des mit Metallverbindungen (VII) umgesetzte, geformten Organosiloxanamin-Copolykondensates mit einem linearen oder verzweigten Alkohol mit 1 bis 5 C-Atomen oder mit Formaldehyd, einem Alkali- oder Erdalkaliformiat, Hydrazin, einer Hydrazin- verbindung, einem Alkali- oder Erdalkalimetallborhydrid, Wasserstoff oder Kohlenmonoxid, oder - hier im trockenen Zustand - mit einer Boranverbindung, einem Alkali- oder Erdalkalimetallalanat, Alan oder einer Alanverbindung oder einem Alkali- oder Erdalkalimetallhydrid durchführt.

**12.** Verfahren zur Herstellung der metallhaltigen geformten Organosiloxanamin-Copolykondensate nach den Ansprüchen 1 bis 7,
**dadurch gekennzeichnet,**
daß man eine oder mehrere wasserhaltige oder wasserfreie Metallverbindungen (VII) zunächst wie in Anspruch 8 mit einem geformten, in Form eines statistischen Block- oder gemischten Copolykondensates (mit gemischter Verteilung der Komponenten in der Polymermatrix vorliegenden Organosiloxanamin, bestehend aus Einheiten der Formel (I) sowie aus Einheiten der Formel(n) (II) und/oder (III), in einem der gewünschten Metallkonzentration entsprechenden stöchiometrischen Verhältnis umsetzt, den metallhaltigen Feststoff sofort oder erst bis zu 24 Stunden danach nach einer oder mehreren der übrigen im Anspruch 8 angegebenen Aufarbeitungsmaßnahmen behandelt und der Reduktion unterwirft.

**13.** Verfahren gemäß Anspruch 12,
**dadurch gekennzeichnet,**
daß man das mit der Metallverbindung VII umgesetzte Copolykondensat in feuchtem oder getrocknetem Zustand vor oder während einer seiner Verwendungen gemäß nachfolgenden Ansprüchen 14 und 15, bei Raumtemperatur bis 300° C, bei Normaldruck oder Überdruck mit Wasserstoff reduktiv behandelt.

**14.** Verwendung der mit Metallverbingen (VII) umgesetzten, geformten Organosiloxanamin-Copolykondensat-Produkte nach den Ansprüchen 1 bis 7 als Katalysatoren für Hydrierungs- und Oxidationsreaktionen.

**15.** Verwendung nach Anspruch 14,
**dadurch gekennzeichnet,**
daß die Organosiloxanamin-Copolykondensat-Produkte für Reaktionen in der Flüssigphase oder in der Gasphase in Suspension oder im Festbett oder im Fließbett eingesetzt werden.

## Claims

**1.** Formed organosiloxanamine copolycondensates containing palladium, platinum, ruthenium and/or rhodium in predominantly elemental form and optionally promoters and/or moderators,
characterised in that
the organosiloxanamine copolycondensate consists of units of the formula (I)

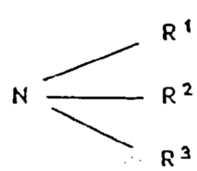

(I)

and of units of the formula (II)

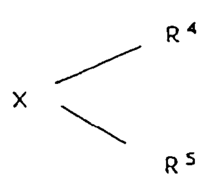

(II)

and/or of units of the formula (III)

$$Y - R^6 \qquad (III)$$

wherein $R^2$ to $R^6$ are identical or different and signify a group of the general formula (IV)

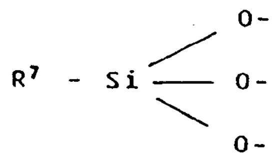

(IV)

wherein $R^7$ is directly bonded to the nitrogen atom or to the group X or to the group Y and represents a linear or branched alkylene group having 1 to 10 C-atoms, a cycloalkylene group having 5 to 8 C-atoms or a unit of the general formula

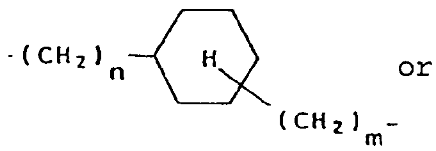

or

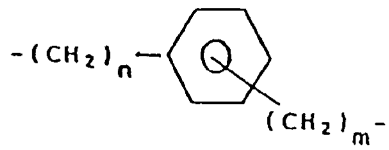

wherein n or m respectively is a number from 0 to 6 and n denotes the number of methylene groups located in the N-, X-, Y-positions and m the number of methylene groups in the Si-position,
$R^1$ is likewise a group of the formula (IV) or represents H, $CH_3$, $C_2H_5$, $C_3H_7$,
X represents -S-, $-S_2-$, $-S_3-$, $-S_4-$,

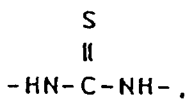

,

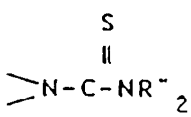

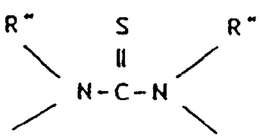

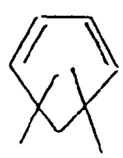

and Y represents -CN, -SCN,-SH, $-S-CH_3$, $-S-C_2H_5$, $-S-C_3H_7$, $-NH_2$, $-NH-(CH_2)_2-NH_2$, $-NH-(CH_2)_2-NH-(CH_2)_2-NH_2$, $-N(CH_3)_2$, $-N(C_2H_5)_2$, $-N(C_3H_7)_2$,

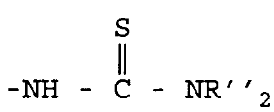

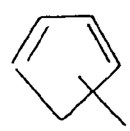

,

wherein R″ is identical to H or a linear or branched alkyl group having 1 to 5 C-atoms or a group $-(CH_2)_n - NR'''_2$, wherein n signifies a number from 1 to 6 and R‴ has the same meaning as R″,
and the free valencies of the oxygen atoms bonded to the Si-atom are saturated by silicon atoms of other groups having the formula (IV) as in silicate lattices and/or by the metal atoms in one or more bridge-type cross-links

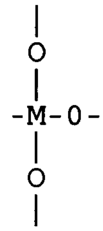 or 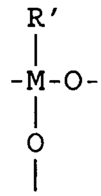 or 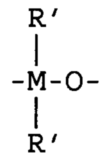

or (V)

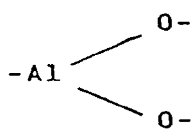 or 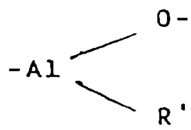

M is a Si-, Ti- or Zr-atom and R′ is a linear or branched alkyl group having 1 to 5 C-atoms or a phenyl group; the ratio of the silicon atoms from the groups of the general formula (IV) to the atoms M and Al in the bridge-type cross-links (V) is 1 : 0 to 1 : 30 and the metal-containing polymeric organosiloxanamine copolycondensates are present as spherical particles having a diameter of from 0.01 to 3.0 mm, a specific surface of from 0.01 to 1000 $m^2/g$, a specific pore volume of from 0.01 to 6.5 ml/g and a bulk density of from 50 to 1000 g/l.

2. Formed metal-containing organosiloxanamine copolycondensates according to claim 1, characterised in that the ratio of units of the formula (I) to units of the formula (II) and/or (III) is 10 : 90 to 95 : 5 mol%.

3. Formed metal-containing organosiloxanamine copolycondensates according to claims 1 or 2, characterised in that $R^1$ to $R^6$ represent a group of the general formula (IV) and are identical or different.

4. Formed metal-containing organosiloxanamine copolycondensates according to claims 1 to 3, characterised in that they are present as statistical copolycondensates, block-copolycondensates or as mixed copolycondensates having a mixed distribution of the components in the polymer matrix.

5. Formed metal-containing organosiloxanamine copolycondensates according to claims 1 to 4, characterised in that $R^1$ to $R^6$ represent a group of the general formula (VI)

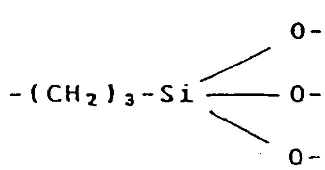 (VI)

6. Formed metal-containing organosiloxanamine copolycondensates according to claims 1 to 5, characterised in that the metals palladium, platinum, ruthenium and rhodium are respectively present alone or in combination on the organosiloxanamine copolycondensate.

7. Formed metal-containing organosiloxanamine copolycondensates according to claims 1 to 6,

characterised in that
the content of palladium, platinum, ruthenium and/or rhodium in the copolycondensate is from 0.001% by weight to 20.0% by weight.

**8.** A process for the preparation of the metal-containing formed organosiloxanamine copolycondensates according to claims 1 to 7,
characterised in that
one or more hydrous or anhydrous metallic compounds (VII) from
$M'_2PdX'_6$, $M'_2PdX'_4$, $PdX'_2$, $PdL_2X'_2$, $PdL_4X'_2$
$M'_2PtX'_6$, $M'_2PtX'_4$, $PtX'_2$, $PtL_2X'_2$, $PtL_4X'_2$
$M'_4RuX'_6$, $M'_4[Ru_2OX'_{10}]$, $RuX'_3$, $Ru(NO)X'_3$, $RuX'_3L_3$
$RuX'_2L_4$, $RuX'_2L_6$, $RuX'_3L_6$
$M'_2RhX_5L$, $M'_3RhX_6$, $RhX'_3$, $RhL_5X'_3$, $RhL_6X'_3$,
$RhL_5X'_3$, $RhL_4X'_3$
$M'RhX'_4L_2$
wherein
X' represents Cl, Br, I, CN, $NO_2$, $NO_3$, ½$SO_4$, acetate, acetylacetonate, OH,
L represents $NH_3$, primary, secondary or tertiary amine or diamine, CO or $H_2O$ and
M' represents H, Na, K, $NH_4$, ½Ca, ½Ba,
are reacted in a stoichiometric proportion corresponding to the desired concentration of metal, in a solvent or mixture of solvents in which the said metallic compound (VII) is at least partially soluble, with a formed, spherically shaped organosiloxanamine starting material present in the form of a statistical, block or mixed copolycondensate and consisting of units of the formula (I) and units of the formula(e) (II) and/or (III), wherein X, Y and $R^1$ to $R^6$ have the same meaning as in claim 1 and the free valencies of the oxygen atoms bonded to the Silicon atom are saturated by silicon atoms of other groups having the formula (IV) as in silicate lattices and/or by the metal atoms in one or more bridge-type crosslinks (V) and M and R' have the same meaning as in claim 1 and the ratio of the silicon atoms from the groups of the general formula (IV) to the atoms M and Al in the bridge-type cross-links (V) is 1 : 0 to 1 : 30, and the spherical particles have a diameter of from 0.01 to 3.0 mm, a specific surface of from 0.01 to 1000 $m^2/g$, a specific pore volume of from 0.01 to 6.5 ml/g and a bulk density of from 50 to 1000 g/l. The solid thus obtained is subsequently treated, optionally after a change of solvent, separation from the liquid phase, washing with the same or another solvent or extraction, drying at room temperature to 250°C in air, under inert gas or in a vacuum, tempering in air or under inert gas at 150 to 300°C and size classification, with a stoichiometric quantity, deficit or excess of a reducing agent for 1 minute to 48 hours at room temperature up to 200°C and optionally at an excess pressure corresponding to the sum of the partial pressures of the components of the reaction mixture at the respective temperature.

**9.** A process according to claim 8,
characterised in that
the reaction of the metallic component with the formed polymeric organosiloxanamine copolycondensate and the subsequent reductive treatment of the solid-containing metal compounds (VII) is conducted in water and/or in a linear or branched alcohol having 1 to 5 C-atoms or in a mixture of both of these.

**10.** A process according to claims 8 or 9
characterised in that
the formed organosiloxanamine copolycondensate that is reacted with metallic compounds (VII) and optionally treated with a reducing agent is washed with a lower, linear or branched, alcohol having 1 to 5 C-atoms following the separation of the liquid phase.

**11.** A process according to claims 8 to 10
characterised in that
the reductive treatment of the formed organosiloxanamine copolycondensate that is reacted with metallic compounds (VII) is carried out with a linear or branched alcohol having 1 to 5 C-atoms or with formaldehyde, an alkali formate or alkaline earth formate, hydrazine, a compound of hydrazine, an alkali borohydride or alkaline earth borohydride, hydrogen or carbon monoxide, or - here in the dry state - with a borane compound, an alkali aluminium hydride or alkaline earth aluminium hydride, aluminium hydride or an aluminium hydride compound or an alkali hydride or alkaline earth hydride.

**12.** A process for the preparation of the formed metal-containing organosiloxanamine copolycondensates according to claims 1 to 7,
characterised in that
one or more hydrous or anhydrous metallic compounds (VII) are first of all, as in claim 8, reacted in a stoichiometric proportion corresponding to the desired concentration of metal with a formed organo-siloxanamine present in the form of a statistical, block or mixed copolycondensate having a mixed distribution of the components in the polymer matrix and consisting of units of the formula (I) and units of the formula(e) (II) and/or (III); the metal-containing solid is treated immediately or for up to 24 hours afterwards according to one or more of the other processing steps given in claim 8 and reduced.

**13.** A process according to claim 12,
characterised in that
the copolycondensate that is reacted with the metallic compounds (VII) is reduced with hydrogen at room temperature to 300°C, at normal pressure or excess pressure, in the moist or dry state, prior to or during one of its uses according to the following claims 14 and 15.

**14.** The use as catalysts for hydrogenation and oxidation reactions of the formed organosiloxanamine copolycondensate products which are reacted with metallic compounds (VII) and are according to claims 1 to 7.

**15.** The use according to claim 14,
characterised in that
the organosiloxanamine copolycondensate products are used for reactions in the liquid phase or in the gaseous phase in suspension or in fixed bed or in fluid bed.

## Revendications

**1.** Copolycondensats organosiloxane-amine formés contenant du palladium, du platine, du ruthénium et/ou du rhodium sous forme principalement élémentaire ainsi que éventuellement des promoteurs et/ou des modérateurs, caractérisés en ce que,
le copolycondensat organosiloxane-amine formé est composé d'unités de formule

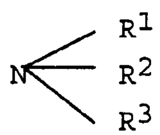

(I)

ainsi que d'unités de formule

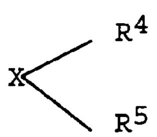

(II)

et/ou d'unités de formule

$$Y -- R^6 \qquad (III)$$

dans lesquelles
$R^2$ à $R^6$ sont égaux ou différents et représentent un groupe de formule générale

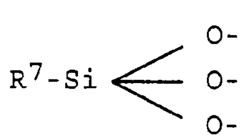

(IV)

où $R^7$ est lié directement à l'atome d'azote ou au groupe X ou au groupe Y et représente un groupe alkylène linéaire ou ramifié avec 1 à 10 atomes de C, une groupe cycloalkylène avec 5 à 8 atomes de C ou une

unité de formule générale

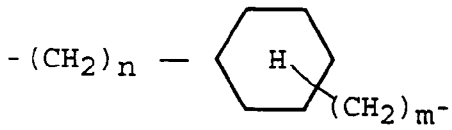

ou

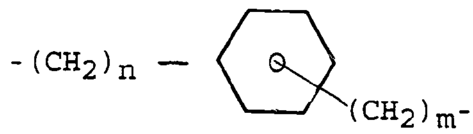

dans laquelle n ou m sont un nombre de 0 à 6 et indique le nombre de groupes méthylène existant dans N, X, Y et m le nombre de groupes méthylène existant avec Si.
$R^1$ est également un groupe de formule 4 ou représente H, $CH_3$, $C_2H_5$, $C_3H_7$,
X représente -S-, $-S_2-$, $-S_3-$, $-S_4-$

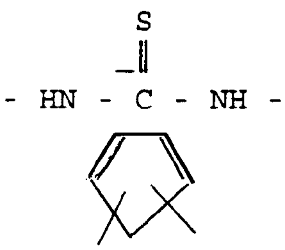

,

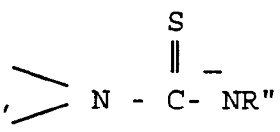

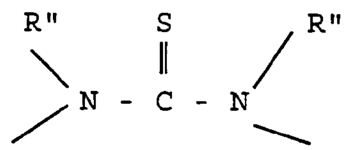

et,
Y représente - CN, - SCN, - SH, $-S-CH_3$, -S-c2h5, $-S-C_3h_7$ - $NH_2$, - NH-$(CH_2)_2$ - $NH_2$, - NH - $(CH_2)_2$ - NH-$(CH_2)_2$ - $NH_2$ -$N(CH_3)_2$, - $N(C_2H_5)_2$, - $N(C_3H_7)_2$,

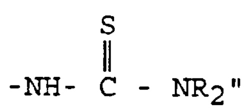

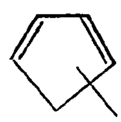

,

où R″ est égal à H ou est un groupe alkyle linéaire ou ramifié avec 1 à 5 atomes de C ou un groupe $-(CH_2)_n-NR''_2{}'$, n étant un nombre de 1 à 6 et R‴ ayant la même signification que R″.
et les valences libres des atomes d'oxygène liés à l'atome de Si sont saturées comme pour les charpentes de l'acide silicique par suite des atomes de silicium d'autres groupes de formule IV et/ou par l'intermédiaire des atomes métalli ques dans un ou plusieurs éléments de ponts réticulés.

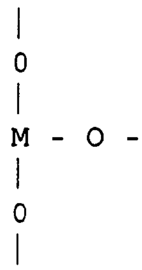 ou 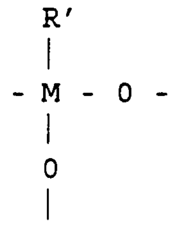 ou 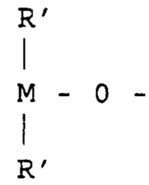

(IV)

ou

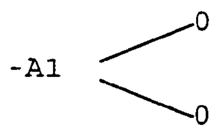 ou 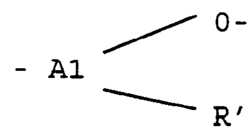

M est un atome de Si, de Ti ou de Zr et R′ est un groupe alkyle linéaire ou ramifié avec 1 à 5 atomes de C ou un groupe phényle, le rapport des atomes de silicium des groupes de formule générale (IV) aux atomes M et Al dans les éléments de ponts (V) réticulés va de 1:0 à 1:30 et les copolycondensats organosiloxane-amine polymères contenant des métaux se présentent macroscopiquement en particules sphériques avec un diamètre de 0,01 à 3,0 mm, une surface spécifique de 0,01 à 1000 $m^2/g$, un volume de pores spécifique de 0,01 à 6,5 ml/g, ainsi qu'une densité en vrac de 50 à 1000 g/l.

**2.** Copolycondensats organosiloxane-amine formés contenant des métaux selon la revendication 1, caractérisés en ce que le rapport des unités de formule (I) aux unités de formule (II) et/ou (III) est compris entre 10:90 et 95:5 % molaire.

**3.** Copolycondensats organosiloxane-amine formés contenant des métaux selon les revendications 1 ou 2, caractérisés en ce que $R^1$ à $R^6$ sont un groupe de formule générale (IV) et sont égaux ou différents.

**4.** Copolycondensats organosiloxane-amine formés contenant des métaux selon les revendications 1 à 3, caractérisés en ce qu'ils se présentent comme des copolycondensats statistiques, des copolycondensats en blocs ou aussi comme des copolycondensats mixtes avec une répartition mixte des composants dans la motrice polymère.

**5.** Copolycondensats organosiloxane-amine formés, contenant des métaux, selon les revendications 1 à 4, caractérisés en ce que $R^1$ à $R^6$ représentent un groupe de formule générale

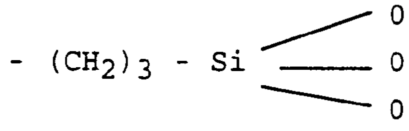 (VI)

**6.** Copolycondensats organosiloxane-amine formés, contenant des métaux selon les revendications 1 à 5, caractérisé en ce que les métaux palladium, platine, ruthénium et rhodium se présentent respectivement seuls ou en combinaison sur le copolycondensat organosiloxane-amine formé.

**7.** Copolycondensats organosiloxane-amine formés contenant des métaux, selon les revendications 1 à 6, caractérisés en ce que le contenu en Pd, Pt, Ru et/ou Rh du copolycondensat se monte à 0,001 % en poids jusqu'à 20,2 % en poids.

**8.** Procédé de préparation des copolycondensats organosiloxane-amine formés contenant des métaux selon les revendications 1 à 7, caractérisé en ce que on transforme un ou plusieurs composés métalliques

(VII) hydratés ou non hydratés de
$M'_2PdX'_6$. $M'_2PdX'_4$. $PdX'_2$. $PdL_2X'_2$. $PdL_4X'_2$
$M'_2PtX'_6$. $M'_2PtX'_4$. $PtX'_2$. $PtL_2X'_2$. $PtL_4X'_2$
$M'_4RuX'_6$. $M'_4[Ru_2OX'_{10}]$. $RuX'_3$. $Ru(NO)X'_3$. $RuX'_3L_3$
$RuX'_2L_4$. $RuX'_2L_6$. $RuX'_3L_6$
$M'_2RhX_5L$. $M'_3RhX_6$. $RhX'_3$. $RhL_5\ X'_3$ $RhL_6X'_3$. $RhL_3X'_3$. $RhL_4X'_3$
$M'RhX'_4$,$L_2$
dans lesquels X′ représente Cl, Br, I, CN, $NO_2$, $NO_3$, ½$SO_4$, un acétate ou un acétylacétonate, OH, L représente $NH_3$, une amine primaire, secondaire ou tertiaire ou une dramine, CO ou $H_2O$ et M′ représente H, Na, K, $NH_4$, ½Ca, ½Ba.
en un solvant dissolvant au moins partiellement le composé métallique (VII) ou en un mélange de solvants avec une matière de base organosiloxane-amine de forme sphérique, se présentant sous la forme d'un copolycondensat statistique, en blocs ou mixte, composé d'unités de formule (I) ainsi que d'unités de formule (II) et/ou (III), dans lesquelles X, Y et $R^1$ à $R^6$ ont la même signification qu'à la revendication 1 et les valences libres des atomes d'oxygène liés à l'atome de silicium sont saturées par des atomes de silicium d'autres groupes de formule (IV) et/ou par les atomes métalliques dans un ou plusieurs éléments de pont réticulés (V) et M et R′ ont la même signification qu'à la revendication 1, et le rapport des atomes de silicium des groupes de formule générale (IV) aux atomes M et Al dans les éléments de pont réticulés (V) est entre 1:0 et 1:30, et les particules sphériques ont un diamètre de 0,01 à 3,0 mm, une surface spécifique de 0,01 à 1000 $m^2/g$, un volume de pores spécifique de 0,01 à 6,5 ml/g, ainsi qu'une densité en vrac de 50 à 1000 g/l,

- dans un rapport stoechiométrique correspondant à la concentration métallique souhaitée,
- ensuite on traite la matière solide ainsi obtenue, éventuellement après un changement de solvant, séparation de la phase liquide, lavage avec le même ou un autre solvant ou extraction, séchage à la température ambiante jusqu'à 250°C à l'air, sous gaz protecteur ou sous vide, recuit à l'air ou sous gaz protecteur entre 150 et 300°C et classification, avec une quantités stoechiométrique ou inférieure ou excédentaire d'un réducteur pendant 1 min. à 48 heures à température ambiante jusqu'à 200°C et éventuellement avec une surpression correspondant à la somme des pressions partielles des composants du mélange réactionnel à la température respective.

**9.** Procédé selon la revendication 8, caractérisé en ce qu'on réalise la réaction du composant métallique avec le copolycondensat organosiloxane-amine polymère formé et le traitement réducteur suivant de la matière solide contenant des composés métalliques (VII) dans l'eau et/ou un alcool linéaire ou ramifié avec 1 à 5 atomes de C ou un mélange des deux.

**10.** Procédé selon les revendications 8 ou 9, caractérisé en ce qu'on lave le copolycondensat organosiloxane-amine formé, mélangé à des composés métalliques (VII), traité éventuellement avec un réducteur après la séparation de la phase liquide avec un alcool inférieur, linéaire ou ramifié ayant de 1 à 5 atomes de C.

**11.** Procédé selon les revendications 8 à 10, caractérisé en ce qu'on exécute le traitement réducteur du copolycondensat organosiloxane- amine formé, transformé par des composés métalliques (VII) avec un alcool linéaire ou ramifié ayant de 1 à 5 atomes de C ou avec du formaldéhyde, un formiate alcalin ou alcalino-terreux, de l'hydrazine, un composé d'hydrazine, un hydrure de bore de métal alcalin ou alcalino-terreux, de l'hydrogène ou du monoxyde de carbone, ou dans ce cas à l'état sec, avec un composé de borane, un alanate de métal alcalin ou alcalino-terreux, un alane ou un composé d'alane ou un hydrure de métal alcalin ou alcalino-terreux.

**12.** Procédé de préparation des copolycondensats organosiloxane-amine formés contenant des métaux selon les revendications 1 à 7, caractérisé en ce qu'on transforme un ou plusieurs composés métalliques (VII) hydratés ou déshydratés, d'abord comme à la revendication 8 avec un organosiloxane-amine formé, existant sous forme d'un copolycondensat statistique en blocs ou mixte avec une répartition mixte des composants dans la matrice polymère, se composant d'unités de formule (I) ainsi que d'unité des formules (II) et/ou (III) dans un rapport stoechiométrique correspondant à la concentration métallique désirée, on traite la matière solide contenant les métaux aussitôt ou jusqu'à 24 heures après selon une ou plusieurs des autres méthodes de retraitement indiquées à la revendication 8 et on le soumet à la réduction.

**13.** Procédé selon la revendication 12, caractérisé en ce que on traite de manière réductrice à l'hydrogène

le copolycondensat transformé par le composé métallique (VII) à l'état humide ou séché avant ou pendant une des ses utilisations selon les revendications suivantes 14 et 15 à température ambiante jusqu'à 300°C, à pression normale ou surpression.

**14.** Utilisation des produits du copolycondensat organosiloxane-amine selon les revendications 1 à 7 comme catalyseurs pour des réactions d'hydrogénation et d'oxydation.

**15.** Utilisation selon la revendication 14, caractérisée en ce que les produits du copolycondensat organosiloxane-amine sont utilisés pour des réactions en phase liquide ou en phase gazeuse dans une suspension ou en lit solide, ou dans un lit fluidifié.